# FASCICULE DE BREVET EUROPEEN

(11) **EP 4 085 188 B1**
(45) Date de publication et mention de la délivrance du brevet: **02.12.2026**
(21) Numéro de dépôt: 20851203.8
(22) Date de dépôt: 18.12.2020
(51) Int. Cl.: F02K 1/60

(54) **INVERSEUR DE POUSSÉE COMPRENANT DES PORTES FORMANT EN POSITION OUVERTE UNE OUVERTURE DE DÉFLEXION D'AIR VERS LE HAUT**
SCHUBUMKEHRER, DER TÜREN UMFASST, DIE IN DER OFFENEN POSITION EINE NACH OBEN GERICHTETE LUFTUMLENKUNGSÖFFNUNG BILDEN
THRUST REVERSER COMPRISING DOORS FORMING AN UPWARD AIR DEFLECTION OPENING IN THE OPEN POSITION

(30) Priorité: 02.01.2020 FR 2000005
(43) Date de publication de la demande: 09.11.2022
(73) Titulaire: Safran Nacelles, 76700 Gonfreville-l'Orcher (FR)
(72) Inventeur: PASCAL, Sébastien, Laurent, Marie, 77550 MOISSY-CRAMAYEL (FR)
(74) Mandataire: Santarelli
(86) Numéro de dépôt international: PCT/FR2020/052543
(87) Numéro de publication internationale: WO 2021/136898

(56) Documents cités:
- EP-A1- 0 715 068
- FR-A1- 2 764 000
- US-A1- 2008 072 570
- US-A1- 2019 162 135

## Description

### Domaine technique

L'invention se rapporte au domaine des inverseurs de poussée pour nacelle d'ensemble propulsif d'aéronef, et plus spécifiquement au domaine des inverseurs à portes.

De manière non limitative, l'invention présente un intérêt particulier lorsqu'un tel inverseur équipe un ensemble propulsif monté au voisinage d'un empennage, c'est-à-dire généralement en partie arrière du fuselage d'un aéronef.

### État de la technique antérieure

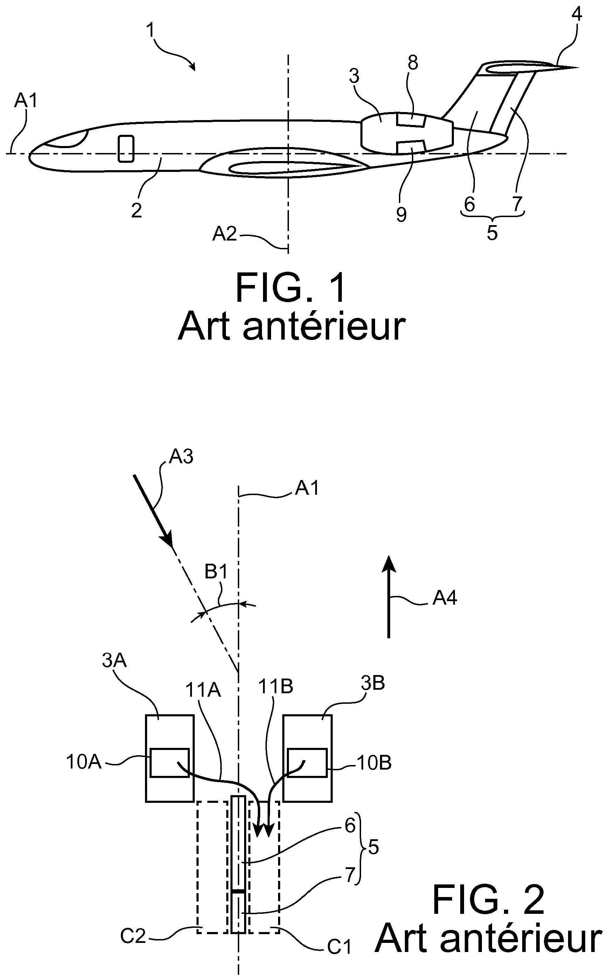

Il est représenté à la figure 1 un avion 1 d'affaires conventionnel s'étendant le long d'un axe longitudinal A1. Cet avion 1 comprend un fuselage 2, deux ensembles propulsifs 3 montés en partie arrière du fuselage 2 (un seul ensemble propulsif étant visible à la figure 1), un empennage horizontal 4 et un empennage vertical 5. L'empennage vertical 5 comprend une partie fixe 6, aussi appelée dérive, et une partie mobile 7, aussi appelée gouverne de direction ou de symétrie. La dérive 6 est destinée à stabiliser l'avion 1 autour d'un axe de lacet A2, notamment afin de maintenir l'axe longitudinal A1 parallèle à l'axe de la piste en phase d'atterrissage en cas de vent de travers (voir ci-après). La gouverne de symétrie 7 est destinée à contrôler le moment de l'avion 1 autour de l'axe de lacet A2, notamment pour pouvoir maintenir l'axe longitudinal A1 parallèle à l'axe de la piste en phase d'atterrissage.

Chacun des ensembles propulsifs 3 comprend un inverseur de poussée ayant une porte supérieure 8 et une porte inférieure 9. A la figure 1, les ensembles propulsifs 3 sont dans une configuration de poussée directe dans laquelle les portes 8 et 9 sont fermées de manière à obturer des ouvertures d'inversion respectives (non représentées sur cette figure).

La figure 2 représente schématiquement les deux ensembles propulsifs (respectivement référencés 3A et 3B) ainsi que l'empennage vertical 5 par rapport audit axe longitudinal A1 et à un vent relatif A3. Le vent relatif A3 est le vent généré par la somme du déplacement de l'avion 1 et du vent. A la figure 2, les ensembles propulsifs 3A et 3B sont dans une configuration d'inversion de poussée dans laquelle lesdites portes (non représentées sur cette figure) sont ouvertes de manière à libérer les ouvertures d'inversion correspondantes, à savoir une ouverture d'inversion supérieure 10A associée à la porte supérieure de l'inverseur de l'ensemble propulsif 3A et une ouverture d'inversion supérieure 10B associée à la porte supérieure de l'inverseur de l'ensemble propulsif 3B.

De manière connue en soi, les portes des ensembles propulsifs 3A et 3B en configuration d'inversion de poussée sont configurées pour rediriger dans un sens amont A4 une partie de l'air sortant des ensembles propulsifs 3A et 3B par les ouvertures d'inversion 10A/10B.

La figure 2 illustre une situation d'atterrissage par vent de travers, entraînant un déplacement de l'avion 1 autour de l'axe de lacet A2 de sorte que son axe longitudinal A1 forme un angle B1 avec la direction du vent relatif A3.

Dans ces conditions, l'empennage vertical 5 est susceptible d'être soumis à des courants d'air asymétriques, compte tenu notamment des trajectoires respectives des écoulements d'air sortant des ensembles propulsifs 3A et 3B par les ouvertures d'inversion supérieures 10A et 10B.

En effet, une partie de l'air sortant de l'ensemble propulsif 3B, par l'ouverture d'inversion supérieure 10B, s'écoule typiquement selon une trajectoire 11B passant par une région C1 s'étendant le long de l'une des faces de l'empennage vertical 5 située du côté de cet ensemble propulsif 3B. Une partie de l'air sortant de l'ensemble propulsif 3A, par l'ouverture d'inversion supérieure 10A, s'écoule typiquement selon une trajectoire 11A contournant la dérive 6 et traversant également la région C1. Du côté de l'ensemble propulsif 3A, une région C2 s'étendant le long de l'autre face de l'empennage vertical 5 se retrouve ainsi sous-alimentée en air.

La sous-alimentation en air de la dérive 6 au niveau de la région C2 entraîne une perte de stabilité de l'avion 1.

De plus, la gouverne 7 ainsi déventée au niveau de la région C2 présente une efficacité réduite susceptible d'entraîner une perte de contrôlabilité de l'avion 1 et potentiellement une sortie de piste. Le document US2008/072570 A1 décrit un autre inverseur de poussée connu dans l'état de la technique.

### Exposé de l'invention

Un but de l'invention est de fournir un inverseur à portes capable d'améliorer la stabilité et la contrôlabilité d'un aéronef lorsque les portes sont ouvertes en phase d'atterrissage, en particulier par vent de travers.

Plus généralement, l'invention vise à procurer un inverseur à portes permettant de mieux maîtriser les écoulements d'air résultant de l'ouverture des portes.

A cet effet, l'invention a pour objet un inverseur de poussée pour ensemble propulsif d'aéronef, cet inverseur présentant un axe central longitudinal et comprenant une structure fixe, une porte inférieure et une porte supérieure, la porte inférieure et la porte supérieure comprenant chacune un bord aval et étant chacune mobile par rapport à la structure fixe, autour d'un axe de rotation respectif, entre :
- une position fermée dans laquelle les portes inférieure et supérieure délimitent avec la structure fixe un conduit d'écoulement, le conduit d'écoulement comprenant une sortie d'éjection délimitée au moins en partie par une extrémité arrière de la structure fixe, les portes inférieure et supérieure en position fermée étant configurées pour pouvoir guider un fluide en écoulement dans le conduit vers sa sortie d'éjection afin de générer une poussée, et
- une position ouverte dans laquelle les portes inférieure et supérieure dégagent chacune une ouverture d'inversion de manière à pouvoir évacuer du conduit d'écoulement une première partie dudit fluide, via ces ouvertures d'inversion, et rediriger au moins une fraction du fluide ainsi évacué vers une extrémité avant de la structure fixe afin de générer une contre-poussée,
le bord aval de la porte inférieure et le bord aval de la porte supérieure définissant, lorsque les portes inférieure et supérieure sont en position ouverte, une ouverture de déflexion configurée pour autoriser une deuxième partie dudit fluide à sortir de l'inverseur par cette ouverture de déflexion.

Selon l'invention, lorsque les portes inférieure et supérieure sont en position ouverte :
- un point médian du bord aval de la porte inférieure est décalé selon l'axe central longitudinal vers l'arrière d'une première distance par rapport à un point médian du bord aval de la porte supérieure, ces points médian intersectant un plan longitudinal médian perpendiculaire audit axe de rotation des portes inférieure et supérieure,
- ledit point médian du bord aval de la porte inférieure est décalé selon une direction verticale, par rapport audit point médian du bord aval de la porte supérieure, vers une extrémité distale de la porte inférieure d'une deuxième distance, la direction verticale étant perpendiculaire à l'axe central longitudinal et à l'axe de rotation des portes inférieure et supérieure,
- le rapport de ladite deuxième distance et de ladite première distance est compris entre 0,2 et 2.

Lorsque l'inverseur est en configuration d'inversion de poussée, un tel décalage des bords aval permet d'orienter ladite deuxième partie de fluide axialement vers l'aval et verticalement vers le haut, au moins dans un système de référence dans lequel la porte inférieure et son bord aval sont situés verticalement en-dessous d'un plan longitudinal médian passant par l'axe central longitudinal de l'inverseur et dans laquelle la porte supérieure et son bord aval sont situés verticalement au-dessus de ce plan longitudinal médian.

Lorsque l'inverseur équipe un ensemble propulsif monté en partie arrière du fuselage d'un aéronef, l'ouverture de déflexion permet ainsi de diriger cette deuxième partie de fluide de manière à augmenter les pressions et vitesses à proximité de l'empennage vertical lequel est typiquement situé verticalement au-dessus de l'axe central longitudinal de l'inverseur.

Il en résulte une augmentation de la pressurisation de la dérive et de la gouverne de cet empennage et par conséquent une amélioration de la stabilité et la contrôlabilité de l'aéronef, notamment par vent de travers.

Plus généralement, une telle géométrie de l'ouverture de déflexion permet de mieux maîtriser les écoulements d'air en configuration d'inversion de poussée.

De préférence, ladite première distance peut être comprise entre cinq pourcent et trente pourcent d'un rayon d'une section de ladite sortie d'éjection lorsque les portes inférieure et supérieure sont en position fermée.

Par ailleurs, il est préféré que l'ouverture de déflexion présente une surface projetée sur un plan de projection perpendiculaire à l'axe central longitudinal comprise entre deux pourcent et dix pourcent d'une surface d'éjection formée par une section de ladite sortie d'éjection lorsque les portes inférieure et supérieure sont en position fermée.

Dans un mode de réalisation, l'axe de rotation de la porte inférieure peut être décalé le long de l'axe central longitudinal par rapport à l'axe de rotation de la porte supérieure.

Dans un mode de réalisation, chacune des portes inférieure et supérieure peut former par rapport à l'axe central longitudinal, lorsque celles-ci sont en position ouverte, un angle d'ouverture compris entre 55° et 65°, de préférence égal à 60°.

Selon une première variante de réalisation, la structure fixe peut comprendre une virole d'éjection annulaire, cette virole d'éjection comprenant un bord de fuite formant ladite extrémité arrière de la structure fixe.

Ainsi, selon cette première variante, la sortie d'éjection peut être intégralement délimitée par l'extrémité arrière de la structure fixe dont le bord de fuite est continu.

Une telle structure fixe permet d'améliorer les performances de l'inverseur en configuration de poussée directe par rapport à une structure fixe dans laquelle la sortie d'éjection est délimitée en partie par l'extrémité arrière de la structure fixe et en partie par le bord aval des portes inférieure et supérieure.

Selon une deuxième variante de réalisation, le bord aval de la porte inférieure et le bord aval de la porte supérieure peuvent délimiter une partie respective de ladite sortie d'éjection lorsque les portes inférieure et supérieure sont en position fermée.

De préférence, l'ouverture de déflexion peut présenter une surface, projetée sur ledit plan de projection, ovoïde, cette surface ovoïde étant préférentiellement centrée sur l'axe central longitudinal.

L'invention a aussi pour objet une nacelle pour ensemble propulsif d'aéronef, cette nacelle comprenant un inverseur tel que décrit ci-dessus.

L'invention a aussi pour objet un ensemble propulsif pour aéronef, cet ensemble propulsif comprenant une telle nacelle.

Enfin, l'invention a aussi pour objet un aéronef comprenant un tel ensemble propulsif.

Dans un mode de réalisation, l'ensemble propulsif peut être relié à un fuselage de cet aéronef de sorte que, selon ladite direction verticale, ledit point médian du bord aval de la porte supérieure soit situé entre ledit point médian du bord aval de la porte inférieure et un empennage vertical de cet aéronef.

Autrement dit, dans ce dernier mode de réalisation, un point constitué par la projection sur ledit plan de projection du point médian du bord aval de la porte supérieure est située verticalement, c'est-à-dire selon la direction verticale, entre un point constitué par la projection sur ce plan de projection du point médian du bord aval de la porte inférieure et un point constitué par la projection sur ce plan de projection d'au moins un point de l'empennage vertical.

Cette configuration permet d'améliorer la stabilité et la contrôlabilité de l'aéronef, notamment par vent de travers, pour les raisons exposées ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique, déjà décrite ci-dessus, d'un aéronef de l'art antérieur, cet aéronef comprenant des ensembles propulsifs équipés chacun d'un inverseur de poussée à portes ;
[Fig. 2] est une vue schématique, déjà décrite ci-dessus, de parties de l'aéronef de la figure 1 en phase d'atterrissage par vent de travers, les inverseurs étant dans une configuration d'inversion de poussée ;
[Fig. 3] est une vue schématique en coupe axiale d'un ensemble propulsif d'aéronef ;
[Fig. 4] est une vue schématique en perspective d'un inverseur de poussée de l'art antérieur, cet inverseur comprenant des portes en position ouverte correspondant à une configuration d'inversion de poussée ;
[Fig. 5] est une vue schématique en coupe axiale de l'inverseur de la figure 4, en configuration d'inversion de poussée ;
[Fig. 6] est une vue schématique en coupe axiale de l'inverseur de la figure 4, en configuration de poussée directe, les portes étant en position fermée ;
[Fig. 7] est une vue schématique de portes inférieure et supérieure d'un inverseur de poussée conforme à l'invention ;
[Fig. 8] est une vue schématique des portes de l'inverseur de la figure 7, les portes comprenant un bord aval selon un premier mode de réalisation de l'invention ;
[Fig. 9] est une vue schématique des portes de l'inverseur de la figure 7, les portes comprenant un bord aval selon un deuxième mode de réalisation de l'invention.

### Description détaillée de modes de réalisation

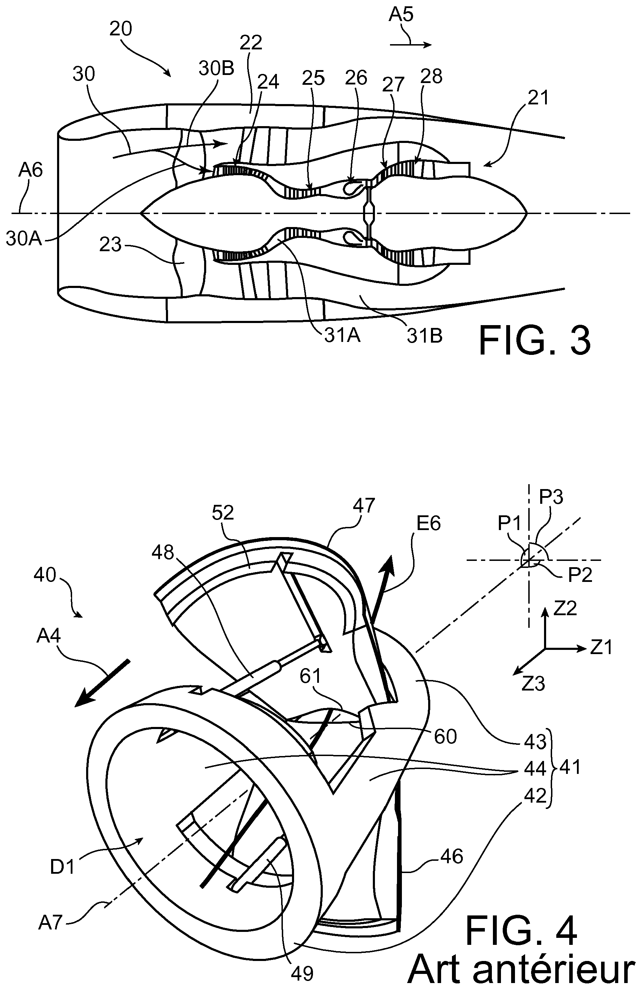

Il est représenté à la figure 3 un ensemble propulsif 20 destiné à être monté sur un aéronef tel l'avion 1 de la figure 1.

Dans la présente description, les termes « amont », « aval », « avant » et « arrière » sont définis par rapport à un sens A5 d'écoulement d'air autour de l'ensemble propulsif 20 lorsque celui-ci génère une poussée, c'est-à-dire un sens A5 opposé au sens du déplacement de l'aéronef qu'il propulse.

De manière connue en soi, l'ensemble propulsif 20 comprend une turbomachine 21 carénée par une nacelle 22. Dans cet exemple, la turbomachine 21 est un turboréacteur à double corps et à double flux.

Le turboréacteur 21 présente un axe central longitudinal A6 autour duquel s'étendent ses différents composants, en l'occurrence, de l'avant vers l'arrière du turboréacteur 21, une soufflante 23, un compresseur basse pression 24, un compresseur haute pression 25, une chambre de combustion 26, une turbine haute pression 27 et une turbine basse pression 28. Les compresseurs 24 et 25, la chambre de combustion 26 et les turbines 27 et 28 forment un générateur de gaz.

Lors du fonctionnement du turboréacteur 21, un écoulement d'air 30 pénètre dans la nacelle 22 par une entrée d'air en amont de l'ensemble propulsif 20, traverse la soufflante 23 puis se divise en un flux primaire 30A central et un flux secondaire 30B. Le flux primaire 30A s'écoule dans une veine primaire 31A de circulation des gaz traversant le générateur de gaz. Le flux secondaire 30B s'écoule dans une veine secondaire 31B entourant le générateur de gaz et délimitée radialement vers l'extérieur par la nacelle 22.

L'invention se rapporte plus spécifiquement à un inverseur de poussée à portes tel que l'inverseur 40 de la figure 4.

De manière générale, l'inverseur 40 a pour fonction d'inverser une partie de la poussée générée par l'ensemble propulsif 20 afin de freiner l'aéronef lors de son atterrissage.

Bien entendu, l'inverseur 40 peut équiper un ensemble propulsif différent de celui de la figure 3 sans sortie du cadre de l'invention.

En référence à la figure 4, l'inverseur 40 comprend d'une part une structure fixe 41 s'étendant le long d'un axe central longitudinal A7.

La structure fixe 41 comprend dans cet exemple un cadre avant 42, une section arrière 43 et deux poutres 44 reliant le cadre avant 42 et la section arrière 43 l'un à l'autre.

Le cadre avant 42 a une forme annulaire configurée pour relier l'inverseur 40 à la nacelle 22, selon toute technique d'assemblage conventionnelle.

Dans cet exemple, la section arrière 43 a une forme annulaire définissant une virole d'éjection. Cette virole d'éjection 43 définit une extrémité arrière à la fois de l'inverseur 40, de la nacelle 22 et de l'ensemble propulsif 20.

Lorsque l'inverseur 40 est monté sur l'ensemble propulsif 20, l'axe central longitudinal A7 de l'inverseur 40 et l'axe central longitudinal A6 de l'ensemble propulsif 20 coïncident.

Le cadre avant 42, la section arrière 43 et les poutres 44 délimitent, radialement vers l'extérieur, un conduit d'écoulement D1 pour un fluide provenant d'une partie de l'ensemble propulsif 20 située en amont de l'inverseur 40.

Plus précisément, le fluide susceptible de s'écouler dans le conduit D1 est dans cet exemple constitué d'un mélange de gaz sortant de la veine primaire 31A et d'air en provenance de la veine secondaire 31B, c'est-à-dire d'un mélange des flux primaire 30A et secondaire 30B.

Le conduit d'écoulement D1 comprend une entrée délimitée par le cadre avant 42 et une sortie d'éjection délimitée par la section arrière 43.

Afin de pouvoir réaliser l'inversion de poussée, la structure fixe 41 comprend dans cet exemple deux ouvertures d'inversion sous forme d'ouvertures radiales.

Chacune de ces ouvertures d'inversion est délimitée, longitudinalement, par le cadre avant 42 et la section arrière 43 et, radialement, par les poutres 44.

L'inverseur 40 de la figure 4 comprend d'autre part une structure mobile sous forme de deux portes 46 et 47 pivotantes.

Les portes 46 et 47 sont respectivement dénommées porte inférieure et porte supérieure, en référence à leur positionnement relatif par rapport à la verticale lorsque l'inverseur 40 est relié à un aéronef en configuration de vol.

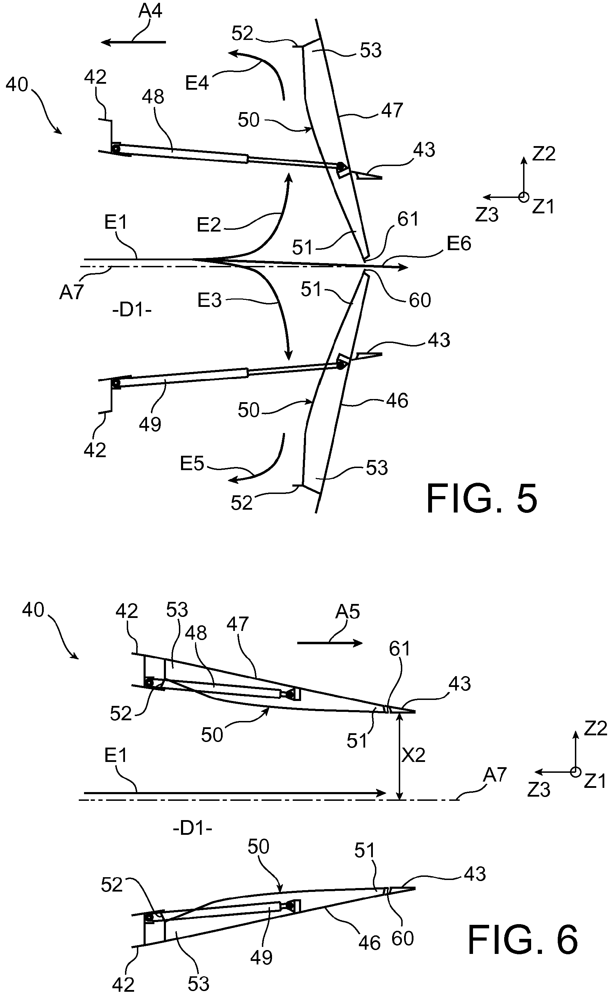

Chacune des portes 46 et 47 est mobile par rapport à la structure fixe 41, autour d'un axe de rotation respectif (non représenté), entre une position ouverte, illustrée aux figures 4 et 5, et une position fermée illustrée à la figure 6.

Pour modifier la position des portes 46 et 47, l'inverseur 40 comprend deux vérins 48 et 49 qui sont chacun reliés d'une part au cadre avant 42 de la structure fixe 41 et d'autre part à l'une respective des portes 46 et 47.

En référence à la figure 6, dans laquelle les portes 46 et 47 sont en position fermée, chacune des portes 46 et 47 obture l'une respective des ouvertures d'inversion de manière à délimiter, en continuité avec la structure fixe 41, le conduit d'écoulement D1.

En position fermée, les portes 46 et 47 permettent de guider vers la sortie d'éjection un fluide E1 pénétrant dans le conduit D1 au niveau du cadre avant 42 et s'écoulant dans le conduit D1 dans une direction globalement parallèle à l'axe central longitudinal A7. Comme indiqué ci-dessus, le flux de fluide E1 comprend dans cet exemple un mélange des flux primaire 30A et secondaire 30B générés par le fonctionnement du turboréacteur 21.

Dans cette configuration de l'inverseur 40 dans laquelle les portes 46 et 47 sont en position fermée, l'ensemble propulsif 20 peut générer une poussée directe. Cette configuration de l'inverseur 40 est dite de poussée directe, ou encore « jet direct ».

En référence à la figure 5, dans laquelle les portes 46 et 47 sont en position ouverte, les portes 46 et 47 dégagent les ouvertures d'inversion de la structure fixe 41.

Cette position ouverte permet d'évacuer du conduit d'écoulement D1, via les ouvertures d'inversion, des parties E2 et E3 du fluide E1 s'écoulant dans le conduit D1. Elle permet en outre de rediriger au moins une partie E4 et E5 du fluide ainsi évacué vers l'amont, c'est-à-dire en particulier vers le cadre avant 42 de la structure fixe 41 et plus généralement vers l'avant de l'ensemble propulsif 20 et de l'aéronef 1. Le fluide ainsi redirigé vers l'amont génère une contre-poussée.

Pour orienter le fluide vers l'amont, les portes 46 et 47 comprennent chacune une paroi interne 50 ayant une extrémité proximale 51 configurée pour s'étendre radialement au travers du conduit d'écoulement D1, de manière à empêcher une partie principale du fluide E1 en écoulement dans le conduit D1 de poursuivre sa trajectoire jusqu'à la sortie d'éjection. L'orientation de la paroi interne 50 est telle que le fluide E1 ainsi bloqué poursuive sa trajectoire en traversant les ouvertures d'inversion et en ayant au moins une composante orientée vers l'amont.

De manière connue en soi, il est possible de maximiser cette composante et d'améliorer les performances en inversion de poussée en plaçant un becquet 52 à une extrémité distale 53 de la paroi interne 50 de chacune des portes 46 et 47.

Lorsque les portes 46 et 47 sont en position ouverte, l'inverseur 40 est dans une configuration dite d'inversion de poussée, aussi appelée « jet inversé ».

Dans la présente description, l'expression « position ouverte » désigne une position d'ouverture maximale telle que représentée aux figures 4 et 5, étant entendu que les portes 46 et 47 occupent transitoirement des positions intermédiaires lors des changements de configuration de l'inverseur 40.

Dans l'inverseur 40 de la figure 4, une fraction E6 du fluide peut toutefois poursuivre sa trajectoire vers la sortie d'éjection lorsque les portes 46 et 47 sont en position ouverte, via une ouverture de fuite délimitée par un bord aval 60 de la porte inférieure 46 et un bord aval 61 de la porte supérieure 47.

Cette fraction de fluide E6 représente typiquement moins de dix pourcent du volume total du fluide E1 introduit dans le conduit D1 et ne réduit pas de manière significative l'effort de contre-poussée généré par les flux E4 et E5 (voir figures 4 et 5).

Les figures 4 et suivantes comprennent un référentiel Z1, Z2 et Z3 définissant respectivement des directions latérale, verticale et longitudinale.

Il est défini par rapport à ce référentiel un premier plan longitudinal médian P1, un deuxième plan longitudinal médian P2 et un plan transversal P3 (voir figure 4). Dans cet exemple, le plan longitudinal médian P1 est un plan vertical parallèle aux directions Z2 et Z3 et passant par l'axe central longitudinal A7 de l'inverseur 40 et par les vérins 48 et 49. Le plan longitudinal médian P2 est un plan horizontal parallèle aux directions Z1 et Z3 qui passe aussi par l'axe central longitudinal A7 et qui est perpendiculaire au plan vertical P1. Le plan transversal P3 est un plan perpendiculaire aux plans longitudinaux médian P1 et P2 et à l'axe central longitudinal A7.

Dans l'inverseur 40 de la figure 4, les portes 46 et 47 sont l'une par rapport à l'autre longitudinalement alignées et symétriques par rapport au plan horizontal P2. Ainsi, dans cet inverseur 40 de l'art antérieur, les bords aval 60 et 61 sont alignés l'un par rapport à l'autre le long de l'axe central longitudinal A7.

Dans une situation telle celle illustrée à la figure 2, l'incidence d'une telle ouverture de fuite a peu sinon pas du tout d'incidence sur la pressurisation de l'empennage 5.

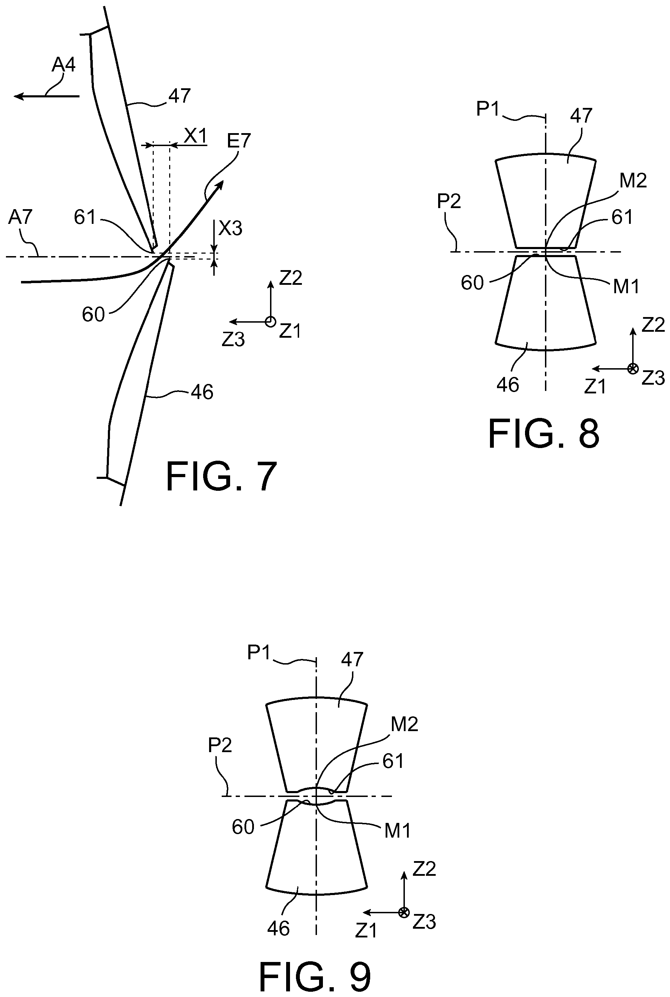

La figure 7 montre les portes 46 et 47 en position ouverte dans une disposition permettant de remédier aux inconvénients exposés ci-dessus en référence à la figure 2. Dans ce qui suit, il est fait référence à un inverseur 40 qui se distingue de celui de la figure 4 essentiellement par la disposition relative des portes 46 et 47. Les autres caractéristiques de l'inverseur 40 portent les mêmes signes de référence et peuvent par conséquent être visualisés sur les figures 4 à 6.

Dans le mode de réalisation de la figure 7, les bords aval 60 et 61 définissent une ouverture de déflexion qui se distingue de l'ouverture de fuite de l'inverseur 40 de la figure 4 en ce qu'elle permet de réorienter vers le haut le fluide E7 sortant du conduit D1 par cette ouverture de déflexion lorsque les portes 46 et 47 sont en position ouverte.

Dans cet exemple, l'ouverture de déflexion permet d'orienter le flux E7 en sortie de l'inverseur 40 selon une direction formant avec le plan horizontal P2 un angle d'une vingtaine de degrés.

A cet effet, le bord aval 60 de la porte inférieure 46 est décalé selon l'axe central longitudinal A7 vers l'arrière par rapport au bord aval 61 de la porte supérieure 47 lorsque les portes 46 et 47 sont en position ouverte. Ce décalage concerne à minima des points médian M1 et M2 des bords aval 60 et 61 respectivement, ces points M1 et M2 étant dits médian car ils intersectent le plan longitudinal médian P1 (voir figures 8 et 9).

Dans cet exemple, ce décalage est obtenu en décalant de manière correspondante les axes de rotation des portes 46 et 47 selon l'axe central longitudinal A7.

De manière alternative ou complémentaire, dans des modes de réalisation non représentés, le décalage longitudinal des bords aval 60 et 61 l'un par rapport à l'autre peut résulter d'un différentiel d'angle d'ouverture des portes 46 et 47, de position de points de liaison des vérins 48 et 49, ou encore de course des vérins 48 et 49.

Lorsque l'inverseur 40 équipe un ensemble propulsif tel l'ensemble propulsif 20 de la figure 3 monté sur un aéronef tel l'avion 1 de la figure 1, un tel décalage des bords aval 60 et 61 permet d'orienter le flux E7 longitudinalement et verticalement vers l'empennage vertical 5 qui est situé vers l'aval de l'ensemble propulsif 20 et verticalement au-dessus de l'axe central longitudinal A7 de l'inverseur 20. Cela permet d'augmenter la pressurisation de la dérive 6 et de la gouverne 7, notamment sous l'action du vent de travers ayant tendance à ramener le flux E7 latéralement vers l'empennage 5.

De préférence, le point médian M1 du bord aval 60 et le point médian M2 du bord aval 61 sont longitudinalement décalés l'un par rapport à l'autre, lorsque les portes 46 et 47 sont en position ouverte, d'une distance X1 comprise entre cinq pourcent et trente pourcent d'un rayon interne X2 de la section arrière 43 de la structure fixe 41 (voir figures 6 et 7).

Pour obtenir une pressurisation satisfaisante de l'empennage 5 sans réduire significativement la contre-poussée, il est par ailleurs préféré que l'ouverture de déflexion présente une surface, projetée sur un plan de projection formé par le plan transversal P3, comprise entre deux pourcent et dix pourcent de la section interne de la section arrière 43. Dans cet exemple, cette section interne est égale à π(X2)². Concernant la surface projetée de l'ouverture de déflexion, celle-ci est notamment calculée en utilisant la distance X3 séparant l'un de l'autre les points médian M1 et M2 dans la direction verticale Z2.

Dans cet exemple, le rapport X3/X1 est proche de 1, de bonnes performances pouvant être généralement obtenues avec un rapport X3/X1 compris entre 0,2 et 2.

Les bords aval 60 et 61 peuvent présenter différentes géométries telles que celles illustrées aux figures 8 et 9.

Dans l'exemple de la figure 8, la projection sur le plan de projection P3 du bord aval 60 de la porte inférieure 46 forme une droite parallèle à la fois au plan horizontal P2 et à la droite formée par la projection sur le plan de projection P3 du bord aval 61 de la porte supérieure 47. Ainsi, pour chaque paire de points des bords aval 60 et 61 intersectant un plan parallèle au plan vertical P1, la distance séparant ces points est identique à la distance X3 séparant les points médians M1 et M2 dans le plan vertical P1.

Dans l'exemple de la figure 9, la projection sur le plan de projection P3 des bords aval 60 et 61 forme des lignes dont l'écart de l'une par rapport à l'autre est plus important au niveau du plan vertical P1 qu'au niveau des extrémités latérales de ces bords aval 60 et 61 ainsi projetés. En particulier, la distance X3 séparant la projection sur ce plan de projection P3 des points médians M1 et M2 est plus grande que la distance séparant l'un de l'autre la projection sur ce plan de projection P3 d'un point du bord aval 60 et la projection sur ce plan de projection P3 d'un point du bord aval 61 intersectant tout autre plan parallèle à ce plan vertical P1.

Dans cet exemple, l'ouverture de déflexion a une forme sensiblement ovoïde permettant de maximiser le flux E7 dans le plan médian vertical P1 de l'inverseur 40.

L'invention n'est aucunement limitée à des inverseurs du type décrit ci-dessus. Par exemple, l'invention s'applique de manière analogue à un inverseur tel celui décrit dans le document FR 2 764 000 A1. Dans ce cas, les poutres sur lesquelles sont articulées les portes comprennent une extrémité arrière qui délimite une partie de la sortie d'éjection lorsque les portes sont en position fermée, le bord aval des portes délimitant une autre partie de la sortie d'éjection lorsque celles-ci sont en position fermée.

Plus généralement, le principe de l'invention peut être mis en œuvre dans toute application nécessitant d'améliorer le contrôle des jets d'air sortant de l'inverseur en inversion de poussée. Par exemple, l'invention présente aussi un intérêt dans des applications dans lesquelles l'inverseur équipe un ensemble propulsif monté sous une aile d'un aéronef.

## Revendications

1. Inverseur de poussée (40) pour ensemble propulsif (20) d'aéronef (1), cet inverseur (40) présentant un axe central longitudinal (A7) et comprenant une structure fixe (41), une porte inférieure (46) et une porte supérieure (47), la porte inférieure (46) et la porte supérieure (47) comprenant chacune un bord aval (60, 61) et étant chacune mobile par rapport à la structure fixe (41), autour d'un axe de rotation respectif, entre :
- une position fermée dans laquelle les portes inférieure (46) et supérieure (47) délimitent avec la structure fixe (41) un conduit d'écoulement (D1), le conduit d'écoulement (D1) comprenant une sortie d'éjection (43) délimitée au moins en partie par une extrémité arrière de la structure fixe (41), les portes inférieure (46) et supérieure (47) en position fermée étant configurées pour pouvoir guider un fluide (E1) en écoulement dans le conduit (D1) vers sa sortie d'éjection (43) afin de générer une poussée, et
- une position ouverte dans laquelle les portes inférieure (46) et supérieure (47) dégagent chacune une ouverture d'inversion de manière à pouvoir évacuer du conduit d'écoulement (D1) une première partie (E2, E3) dudit fluide, via ces ouvertures d'inversion, et rediriger au moins une fraction (E4, E5) du fluide ainsi évacué vers une extrémité avant (42) de la structure fixe (41) afin de générer une contre-poussée,
le bord aval (60) de la porte inférieure (46) et le bord aval (61) de la porte supérieure (47) définissant, lorsque les portes inférieure (46) et supérieure (47) sont en position ouverte, une ouverture de déflexion configurée pour autoriser une deuxième partie (E7) dudit fluide à sortir de l'inverseur (40) par cette ouverture de déflexion, cet inverseur (40) étant **caractérisé en ce que**, lorsque les portes inférieure (46) et supérieure (47) sont en position ouverte :
- un point médian (M1) du bord aval (60) de la porte inférieure (46) est décalé selon l'axe central longitudinal (A7) vers l'arrière d'une première distance (X1) par rapport à un point médian (M2) du bord aval (61) de la porte supérieure (47), ces points médian (M1, M2) intersectant un plan longitudinal médian (P1) perpendiculaire audit axe de rotation des portes inférieure (46) et supérieure (47),
- ledit point médian (M1) du bord aval (60) de la porte inférieure (46) est décalé selon une direction verticale (Z2), par rapport audit point médian (M2) du bord aval (61) de la porte supérieure (47), vers une extrémité distale (53) de la porte inférieure (46) d'une deuxième distance (X3), la direction verticale (Z2) étant perpendiculaire à l'axe central longitudinal (A7) et à l'axe de rotation des portes inférieure (46) et supérieure (47),
- le rapport de ladite deuxième distance (X3) et de ladite première distance (X1) est compris entre 0,2 et 2.

2. Inverseur (40) selon la revendication 1, dans lequel ladite première distance (X1) est comprise entre cinq pourcent et trente pourcent d'un rayon (X2) d'une section de ladite sortie d'éjection (43) lorsque les portes inférieure (46) et supérieure (47) sont en position fermée.

3. Inverseur (40) selon la revendication 1 ou 2, dans lequel l'ouverture de déflexion présente une surface projetée sur un plan de projection (P3) perpendiculaire à l'axe central longitudinal (A7) comprise entre deux pourcent et dix pourcent d'une surface d'éjection formée par une section de ladite sortie d'éjection (43) lorsque les portes inférieure (46) et supérieure (47) sont en position fermée.

4. Inverseur (40) selon l'une quelconque des revendications 1 à 3, dans lequel l'axe de rotation de la porte inférieure (46) est décalé le long de l'axe central longitudinal (A7) par rapport à l'axe de rotation de la porte supérieure (47).

5. Inverseur (40) selon l'une quelconque des revendications 1 à 4, dans lequel chacune des portes inférieure (46) et supérieure (47) forme par rapport à l'axe central longitudinal (A7), lorsque celles-ci sont en position ouverte, un angle d'ouverture compris entre 55° et 65°, de préférence égal à 60°.

6. Inverseur (40) selon l'une quelconque des revendications 1 à 5, dans lequel la structure fixe (41) comprend une virole d'éjection (43) annulaire, cette virole d'éjection (43) comprenant un bord de fuite formant ladite extrémité arrière de la structure fixe (41).

7. Inverseur (40) selon l'une quelconque des revendications 1 à 5, dans lequel le bord aval (60) de la porte inférieure (46) et le bord aval (61) de la porte supérieure (47) délimitent une partie respective de ladite sortie d'éjection lorsque les portes inférieure (46) et supérieure (47) sont en position fermée.

8. Inverseur (40) selon l'une quelconque des revendications 1 à 7, dans lequel l'ouverture de déflexion présente une surface, projetée sur un plan de projection (P3) perpendiculaire à l'axe central longitudinal (A7), ovoïde.

9. Ensemble propulsif (20) pour aéronef (1), cet ensemble propulsif (20) comprenant une nacelle (22) comprenant un inverseur (40) selon l'une quelconque des revendications 1 à 8.

10. Aéronef (1) comprenant un fuselage (2), un empennage vertical (5) et un ensemble propulsif (20) selon la revendication 9, l'ensemble propulsif (20) étant relié au fuselage (2) de sorte que, selon ladite direction verticale (Z2), ledit point médian (M2) du bord aval (61) de la porte supérieure (47) soit situé entre ledit point médian (M1) du bord aval (60) de la porte inférieure (46) et l'empennage vertical (5).

## Patentansprüche

1. Schubumkehrvorrichtung (40) für eine Antriebsanordnung (20) eines Luftfahrzeugs (1), wobei diese Schubumkehrvorrichtung (40) eine zentrale Längsachse (A7) aufweist und eine feststehende Struktur (41), eine untere Klappe (46) und eine obere Klappe (47) umfasst, wobei die untere Klappe (46) und die obere Klappe (47) jeweils eine stromabwärtige Kante (60, 61) aufweisen und jeweils relativ zur feststehenden Struktur (41) um eine jeweilige Drehachse zwischen folgenden Stellungen beweglich sind:
- einer geschlossenen Stellung, in der die untere Klappe (46) und die obere Klappe (47) zusammen mit der feststehenden Struktur (41) einen Strömungskanal (D1) begrenzen, wobei der Strömungskanal (D1) eine Auslassöffnung (43) aufweist, die zumindest teilweise durch ein hinteres Ende der feststehenden Struktur (41) begrenzt ist, und wobei die untere Klappe (46) und die obere Klappe (47) in der geschlossenen Stellung dazu eingerichtet sind, ein in dem Kanal (D1) strömendes Fluid (E1) zu dessen Auslassöffnung (43) leiten zu können, um einen Schub zu erzeugen, und
- einer geöffneten Stellung, in der die untere Klappe (46) und die obere Klappe (47) jeweils eine Umkehröffnung freigeben, um einen ersten Teil (E2, E3) des Fluids über diese Umkehröffnungen aus dem Strömungskanal (D1) abführen und zumindest einen Anteil (E4, E5) des so abgeführten Fluids zu einem vorderen Ende (42) der feststehenden Struktur (41) umlenken zu können, um einen Gegenschub zu erzeugen,
wobei die stromabwärtige Kante (60) der unteren Klappe (46) und die stromabwärtige Kante (61) der oberen Klappe (47), wenn sich die untere Klappe (46) und die obere Klappe (47) in der geöffneten Stellung befinden, eine Ablenköffnung definieren, die dazu eingerichtet ist, einem zweiten Teil (E7) des Fluids zu ermöglichen, durch diese Ablenköffnung aus der Schubumkehrvorrichtung (40) auszutreten,
wobei diese Schubumkehrvorrichtung (40) **dadurch gekennzeichnet ist, dass**, wenn sich die untere Klappe (46) und die obere Klappe (47) in der geöffneten Stellung befinden,
- ein Mittelpunkt (M1) der stromabwärtigen Kante (60) der unteren Klappe (46) entlang der zentralen Längsachse (A7) gegenüber einem Mittelpunkt (M2) der stromabwärtigen Kante (61) der oberen Klappe (47) um einen ersten Abstand (X1) nach hinten versetzt ist, wobei diese Mittelpunkte (M1, M2) in einer Längsmittelebene (P1) liegen, die senkrecht zu der Drehachse der unteren Klappe (46) und der oberen Klappe (47) ist,
- der Mittelpunkt (M1) der stromabwärtigen Kante (60) der unteren Klappe (46) in einer vertikalen Richtung (Z2) gegenüber dem Mittelpunkt (M2) der stromabwärtigen Kante (61) der oberen Klappe (47) um einen zweiten Abstand (X3) zu einem distalen Ende (53) der unteren Klappe (46) hin versetzt ist, wobei die vertikale Richtung (Z2) senkrecht zur zentralen Längsachse (A7) und zur Drehachse der unteren Klappe (46) und der oberen Klappe (47) ist, und
- das Verhältnis des zweiten Abstands (X3) zum ersten Abstand (X1) zwischen 0,2 und 2 liegt.

2. Schubumkehrvorrichtung (40) nach Anspruch 1, wobei der erste Abstand (X1) zwischen fünf Prozent und dreißig Prozent eines Radius (X2) beträgt, den ein Querschnitt der Auslassöffnung (43) aufweist, wenn sich die untere Klappe (46) und die obere Klappe (47) in der geschlossenen Stellung befinden.

3. Schubumkehrvorrichtung (40) nach Anspruch 1 oder 2, wobei die Ablenköffnung eine auf eine zur zentralen Längsachse (A7) senkrechte Projektionsebene (P3) projizierte Fläche aufweist, die zwischen zwei Prozent und zehn Prozent einer Auslassfläche beträgt, die durch einen Querschnitt der Auslassöffnung (43) gebildet wird, wenn sich die untere Klappe (46) und die obere Klappe (47) in der geschlossenen Stellung befinden.

4. Schubumkehrvorrichtung (40) nach einem der Ansprüche 1 bis 3, wobei die Drehachse der unteren Klappe (46) entlang der zentralen Längsachse (A7) gegenüber der Drehachse der oberen Klappe (47) versetzt ist.

5. Schubumkehrvorrichtung (40) nach einem der Ansprüche 1 bis 4, wobei die untere Klappe (46) und die obere Klappe (47), wenn sie sich in der geöffneten Stellung befinden, jeweils gegenüber der zentralen Längsachse (A7) einen Öffnungswinkel zwischen 55° und 65°, vorzugsweise gleich 60°, bilden.

6. Schubumkehrvorrichtung (40) nach einem der Ansprüche 1 bis 5, wobei die feststehende Struktur (41) einen ringförmigen Auslassmantel (43) umfasst, wobei dieser Auslassmantel (43) eine Hinterkante umfasst, die das hintere Ende der feststehenden Struktur (41) bildet.

7. Schubumkehrvorrichtung (40) nach einem der Ansprüche 1 bis 5, wobei die stromabwärtige Kante (60) der unteren Klappe (46) und die stromabwärtige Kante (61) der oberen Klappe (47) jeweils einen Abschnitt der Auslassöffnung begrenzen, wenn sich die untere Klappe (46) und die obere Klappe (47) in der geschlossenen Stellung befinden.

8. Schubumkehrvorrichtung (40) nach einem der Ansprüche 1 bis 7, wobei die Ablenköffnung eine auf eine zur zentralen Längsachse (A7) senkrechte Projektionsebene (P3) projizierte eiförmige Fläche aufweist.

9. Antriebsanordnung (20) für ein Luftfahrzeug (1), wobei diese Antriebsanordnung (20) eine Triebwerksgondel (22) umfasst, die eine Schubumkehrvorrichtung (40) nach einem der Ansprüche 1 bis 8 umfasst.

10. Luftfahrzeug (1), umfassend einen Rumpf (2), ein Seitenleitwerk (5) und eine Antriebsanordnung (20) nach Anspruch 9, wobei die Antriebsanordnung (20) derart mit dem Rumpf (2) verbunden ist, dass sich in der vertikalen Richtung (Z2) der Mittelpunkt (M2) der stromabwärtigen Kante (61) der oberen Klappe (47) zwischen dem Mittelpunkt (M1) der stromabwärtigen Kante (60) der unteren Klappe (46) und dem Seitenleitwerk (5) befindet.

## Claims

1. A thrust reverser (40) for an aircraft (1) propulsion assembly (20), this reverser (40) having a central longitudinal axis (A7) and comprising a fixed structure (41), a lower door (46) and an upper door (47), the lower door (46) and the upper door (47) each comprising a downstream edge (60, 61) and each being movable with respect to the fixed structure (41), around a respective axis of rotation, between:
- a closed position wherein the lower (46) and upper (47) doors delimit with the fixed structure (41) a flow conduit (D1), the flow conduit (D1) comprising an ejection outlet (43) delimited at least partly by a rear end of the fixed structure (41), the lower (46) and upper (47) doors in the closed position being configured to be able to guide a fluid (E1) flowing in the conduit (D1) to its ejection outlet (43) to generate a thrust, and
- an open position wherein the lower (46) and upper (47) doors each release a reversal opening so as to be able to evacuate from the flow conduit (D1) a first portion (E2, E3) of said fluid, via these reversal openings, and redirect at least a fraction (E4, E5) of the fluid thus evacuated towards a front end (42) of the fixed structure (41) in order to generate counter-thrust,
the downstream edge (60) of the lower door (46) and the downstream edge (61) of the upper door (47) defining, when the lower (46) and upper (47) doors are in the open position, a deflection opening configured to allow a second portion (E7) of said fluid to exit the reverser (40) through this deflection opening, this reverser (40) being **characterised in that**, when the lower (46) and upper (47) doors are in the open position:
- a midpoint (M1) of the downstream edge (60) of the lower door (46) is offset along the central longitudinal axis (A7) towards the rear by a first distance (X1) with respect to a midpoint (M2) of the downstream edge (61) of the upper door (47), these midpoints (M1, M2) intersecting a median longitudinal plane (P1) perpendicular to said axis of rotation of the lower (46) and upper (47) doors,
- said midpoint (M1) of the downstream edge (60) of the lower door (46) is offset in a vertical direction (Z2), with respect to said midpoint (M2) of the downstream edge (61) of the upper door (47), towards a distal end (53) of the lower door (46) by a second distance (X3), the vertical direction (Z2) being perpendicular to the central longitudinal axis (A7) and to the axis of rotation of the lower (46) and upper (47) doors,
- the ratio of said second distance (X3) and said first distance (X1) is comprised between 0.2 and 2.

2. The reverser (40) according to claim 1, wherein said first distance (X1) is comprised between five percent and thirty percent of a radius (X2) of a section of said ejection outlet (43) when the lower (46) and upper (47) doors are in the closed position.

3. The reverser (40) according to claim 1 or 2, wherein the deflection opening has a surface projected onto a projection plane (P3) perpendicular to the central longitudinal axis (A7) comprised between two percent and ten percent of an ejection surface formed by a section of said ejection outlet (43) when the lower (46) and upper (47) doors are in the closed position.

4. The reverser (40) according to any one of claims 1 to 3, wherein the axis of rotation of the lower door (46) is offset along the central longitudinal axis (A7) with respect to the axis rotation of the upper door (47).

5. The reverser (40) according to any one of claims 1 to 4, wherein each of the lower (46) and upper (47) doors forms with respect to the central longitudinal axis (A7), when said doors are in the open position, an opening angle comprised between 55° and 65°, preferably equal to 60°.

6. The reverser (40) according to any one of claims 1 to 5, wherein the fixed structure (41) comprises an annular ejection shroud (43), this ejection shroud (43) comprising a trailing edge forming said rear end of the fixed structure (41).

7. The reverser (40) according to any one of claims 1 to 5, wherein the downstream edge (60) of the lower door (46) and the downstream edge (61) of the upper door (47) delimit a respective portion of said ejection outlet when the lower (46) and upper (47) doors are in the closed position.

8. The reverser (40) according to any one of claims 1 to 7, wherein the deflection opening has an ovoid surface, projected onto a projection plane (P3) perpendicular to the central longitudinal axis (A7).

9. A propulsion assembly (20) for an aircraft (1), this propulsion assembly (20) comprising a nacelle (22) comprising a reverser (40) according to any one of claims 1 to 8.

10. An aircraft (1) comprising a fuselage (2), a vertical tail (5) and a propulsion assembly (20) according to claim 9, the propulsion assembly (20) being connected to the fuselage (2) so that, in said vertical direction (Z2), said midpoint (M2) of the downstream edge (61) of the upper door (47) is located between said midpoint (M1) of the downstream edge (60) of the lower door (46) and the vertical tail (5).
